# FASCICULE DE BREVET EUROPEEN

(11) **EP 1 109 747 B1**
(45) Date de publication et mention de la délivrance du brevet: **17.08.2005**
(21) Numéro de dépôt: 00922774.5
(22) Date de dépôt: 27.04.2000
(51) Int. Cl.: C02F 3/10, C02F 3/06

(54) **STRUCTURES ACTIVES D'EPURATION POUR LE GARNISSAGE ET LA CONSTITUTION DE FILTRES PHYSICO-BIOLOGIQUES COMPACTS**
AKTIVE TRÄGERSTRUKTUR FÜR EINE KOMPAKTE ABWASSERREINIGUNGSVORRICHTUNG
ACTIVE PURIFYING STRUCTURES FOR LINING AND FORMING COMPACT PHYSICO-BIOLOGICAL FILTERS

(30) Priorité: 30.04.1999 FR 9905801
(43) Date de publication de la demande: 27.06.2001
(73) Titulaire: Dautais, Jean-Pierre, 44115 Basse Goulaine (FR)
(72) Inventeur: Dautais, Jean-Pierre, 44115 Basse Goulaine (FR)
(86) Numéro de dépôt international: PCT/FR2000/001128
(87) Numéro de publication internationale: WO 2000/066502

(56) Documents cités:
- DE-A- 19 610 056
- US-A- 4 940 547
- US-A- 5 116 506
- PATENT ABSTRACTS OF JAPAN vol. 1999, no. 03, 31 mars 1999 (1999-03-31) & JP 10 323694 A (HIROSHIMA PREF GOV), 8 décembre 1998 (1998-12-08)
- PATENT ABSTRACTS OF JAPAN vol. 010, no. 335 (C-384), 13 novembre 1986 (1986-11-13) & JP 61 138596 A (KUBOTA LTD), 26 juin 1986 (1986-06-26)
- PATENT ABSTRACTS OF JAPAN vol. 1996, no. 08, 30 août 1996 (1996-08-30) & JP 08 103780 A (KURITA WATER IND LTD), 23 avril 1996 (1996-04-23)

## Description

La présente invention concerne des structures actives d'épuration, pour le garnissage particulier et la constitution de filtres physico-biologiques dits compacts et destinés principalement à l'assainissement autonome et des petites collectivités. Plus particulièrement ces matériaux et formes induites ou milieux à anisotropie contrôlée, sur une épaisseur de percolation choisie, améliorent l'élimination de l'azote sous sa forme nitrique et celle des bactéries.

Les moyens actuels décrits dans de très nombreux brevets et dans la littérature spécialisée, n'apportent pas la solution efficace sur l'ensemble des critères d'élimination de pollutions, c'est à dire, compacte, standard, économique ou, ayant la souplesse nécessaire à une exploitation simplifiée.

Les filtres à sables commercialisés, les plus performants, ne sont pas assez efficaces sur la dénitrification, ou le recyclage préconisé implique une surface accrue des filtres. Certains systèmes, stratifiés et granulaires, relativement efficaces sur des témoins de contamination comme les Coliformes fécaux par exemple, se colmatent trop rapidement ou n'acceptent que de faibles charges hydrauliques.

Les filtres où les matériaux granulaires sont remplacés par la laine de roche ou des matériaux organiques stables et dans des formes appropriées, progressent dans la performance sur certains paramètres de traitement, mais avec des contraintes encore trop importantes.

La présente invention a donc pour objet principal de remédier à ces inconvénients, en proposant d'une part ces structures actives nouvelles dans leur composition ,formes , simples ou mélanges composites , planes ou non, fibreuses, granulaires, composées de substrats ou séquestrantes, supports physiques, chimiques, biologiques et hydrodynamiques, renouvelables ou non, compressibles ou non, et d'autre part des modes d'utilisation formant des réacteurs individuels ou non et, travaillant en associations anisotropes, partiellement renouvelables.

A cet effet la présente invention concerne le choix de matériaux, structures préexistantes ou non, et de modes de réalisation des macro structures actives suivantes :
- Membrane structure active de répartition semi-perméable, de plus ou moins grande surface, en position quelconque par rapport à la verticale, une ou des fractions de la surface se différentiant au moins sur un critère, en particulier hydraulique,
- Membrane structure de distribution de substrats organiques et autres produits, mobile ou non, pouvant stimuler les transformations ou séparations,
- Membrane structure à propriétés physiques, pour tout ou partie, de chauffage d'une culture biologique par exemple dénitrifiante, désinfection par contact, désinfection par message électrique calibré,
- Membrane filtrante ou de contact, mobile ou non, pour l'extraction du phosphore, de polluants réfractaires ou spécifiques, combinant une matrice fibreuse ou enveloppe et des matériaux séquestrants renouvelables,
Egalement à cet effet, tout ou partie de microstructures actives, sont utilisables préférentiellement en mélange, en constituant des micro réacteurs, ayant une fonction, physique, chimique, biologique, ou mixte :
- Pour l'aération de proximité, en liaison avec un réseau primaire,
- Comme compartiment en anoxie ou échangeur d'électrons,
- En suscepteurs ou matériaux actifs, émetteur de chaleur, à propriété de surface conducteur, désinfectant, séquestrant, perméable en grand, capillaire, réservoir imperméable ou non, fournisseur de substrat et activateur, notamment,
- En faisant appel à des matériaux de toute origine, préférentiellement des fibres polymères ou naturelles, en mélange ou non avec des grains, neutres ou actifs, notamment.

A partir de matériaux naturels ou industrialisés, il devient possible de réaliser, au moyen d'opérations simples, l'ensemble des matériaux structures, particulièrement adaptés à la séparation de phases, à la fixation biologique, à l'extraction de polluant et à la bonne distribution des fluides, pour chaque critère de traitement et tout au long du cheminement de transformations complexes et interactives. Les supports ainsi créés sont adaptés à être placés facilement et en proportions et positions adéquates, dans une enceinte, réacteur d'épuration.

De préférence ces matériaux structures actives sont utilisables, dans les filtres biologiques modernes, pour leur optimisation, filtres à base de sable, tourbe et laine de roche et autres matériaux. Ils trouvent leur meilleure application dans des réacteurs spécifiques nouveaux.

Des modèles principaux d'exécution sont décrits et illustrés ci-après à titre d'exemple :

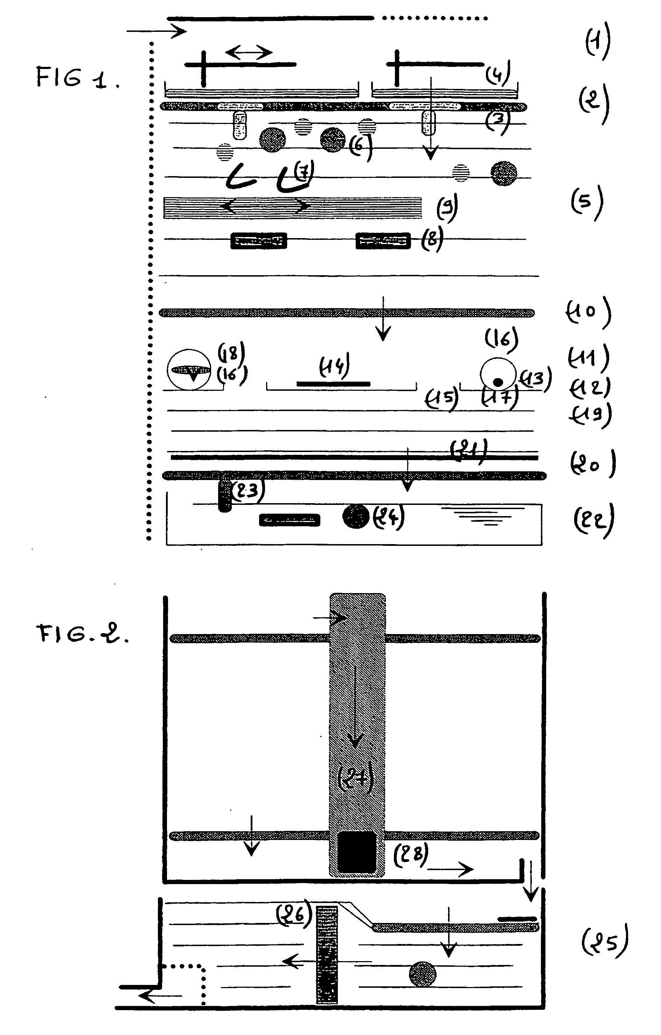

- La figure 1 est une vue en coupe des dispositifs illustrant le positionnement des structures actives dans un réacteur compartimenté,
- La figure 2 est une variante associée à un filtre de traitement tertiaire,

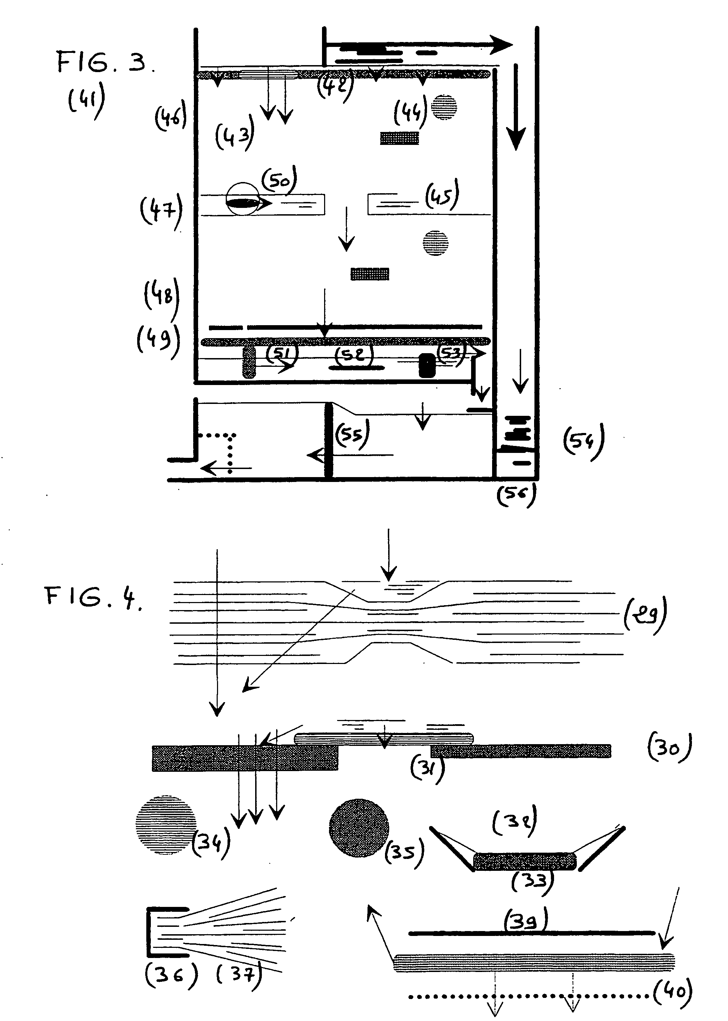

- La figure 3 illustre le concept de fonctionnement hydrodynamique,
- La figure 4 représente quelques modèles de structures actives

De préférence le dispositif général innovant permettant la meilleure utilisation des matériaux structures destinés à l'épuratipn de fluides est équipé , d'un compartiment d'alimentation (1), en provenance d'un réservoir, d'un premier niveau membranaire (2), réunissant un support semi-perméable non homogène et composite (3), séparateur et régulateur de distribution, surmonté d'un module d'extraction et de régulation (4). A la suite de ce dispositif d'entrée, le compartiment suivant (5), fibreux accueille en mélange les microstructures suivantes, boules creuses nids d'abeille (6) ou flocons fibreux, chips formant cuvettes(7) simples ou composites, nappes de fibres de roche calandrées (8) ou pressées, par exemple, matériaux structures et permettant un mélange ou une association intime des gradients rédox, humidité, ventilation, et une connexion maîtrisée avec un réseau de ventilation primaire (9), sa vocation principale étant l'épuration carbonée et secondairement la dénitrification. Un deuxième niveau membranaire et de régulation spécifique (10), limite ce compartiment. Le troisième compartiment (11), est dans sa forme privilégiée, réservé principalement à la dénitrification, le troisième niveau membranaire (12), permettant la constitution de nappes (13), à l'intérieure desquelles peuvent circuler des rubans chauffants (14) pouvant fonctionner à l'énergie solaire, nappes se constituant autour de reliefs avec surverses (15). Dans ce compartiment ainsi constitué, des volumes creux (16), sont réservés à l'injection de substrats carbonés à minéralisation contrôlée, en suspensions lourdes (17) ou par noria entraînant un complexe fourreau substrat actif (18) ou textile substrat. Le compartiment suivant (19) simplement fibreux par exemple peut parfaire la pollution carbonée et azotée tout en poursuivant l'élimination des pathogènes. Un quatrième niveau membranaire (20), en communication avec un réservoir vidange l'ensemble du système principal d'épuration décrit. Il peut comporter un niveau suscepteurs (21) ou matériaux transmettant des influx spécifiques électriques dopant l'élimination des pathogènes en déficit de nutriment.

Le quatrième compartiment (22), peut être un simple bac, ou préférentiellement recevoir, une continuité capillaire (23), comme le compartiment de dénitrification en noria ou injection de mélange des matériaux structures actives (24), pour l'élimination les pathogènes, l'élimination du phosphore et/ou de polluants non dégradés ou piégés dans le système principal.

Dans une autre réalisation particulière, la finition de l'épuration peut se réaliser dans un filtre horizontal (25), dit tertiaire en mélangeant des fibres et des microstructures actives en noria ou en cartouches consommables (26). Dans une autre réalisation particulière et pour faciliter la mise en oeuvre de la solution principale, il est proposé d'utiliser une réservation centrale (27) qui peut également être en rapport avec un silo à boues (28), équipé d'un dispositif d'extraction. Pour le filtre tertiaire, utilisable en association ou seul, à vocation simple ou multiple, il est proposé de le rendre indépendant, positionné en surface, pour éviter des surprofondeurs et faciliter l'exploitation des cartouches actives, pour des renouvellements autant que de besoin de préférence annuels.

Dans une application particulière, les structures actives, sont réalisées, sélectionnées, et positionnées de la manière suivante:
- Les matériaux fibreux, utilisables en vrac ou nappes plus ou moins régulières et composites, subissent pour tout ou partie des traitements secondaires d'induration, de mouillabilité contrôlée, de compression de cardage, de calandrage et autres traitements appropriés, pour établir des hétérogénéités contrôlées et gradients de porosités. Par exemple une nappe de laine de roche (29), après traitement présente un micro-relief de distribution et des gradients de porosités drainantes ou capillaires, avec une répartition dans l'espace des fonctions principales hydrauliques, de ventilation et biologiques. Un autre mode de réalisation consiste à associer en discontinu, sur tout ou partie d'une section de transit de réacteur des alternances de plages de matériaux, par exemple des géotextiles drainants ou capillaires, dans un maillage serré plus ou moins épais (30) définissant des zones aérobies et anaérobies proches pour échanges (31) et des zones hydrauliquement plus actives.
- A l'intérieur d'une matrice fibreuse ou granulaire sont incorporés des formes réservoirs chips (32) ou petits réservoirs équivalents, qui dans une formulation particulière ont une paroi poreuse (33), neutre ou porteuse de substrat carboné et autres produits actifs, favorables à la dénitrification biologique.
   Dans une matrice fibreuse, granulaire ou mixte, les chips en proportion notable, favorisent également la distribution horizontal des fluides et limitent ou orientent les passages préférentiels. Organiques ou non , flottants ou non, ils peuvent constituer la source progressive d'appqrt de carbone pour la dénitrification ou d'autres matériaux actifs en épuration.
- Des micro réacteurs composites, structures actives (34) sont réalisables à partir de flocons fibreux, avec addition ou non de poudres et encapsulation partielle par résine ou colle appropriée ou traitement thermique, réalisables également avec les mousses ou grains formant grumeaux (35) ou structures de formes variées utilisables en vrac.
- Une forme particulièrement attractive est signalée pour sa capacité à créer des gradients d'humidité, de perméabilité et d'aération, sous forme de pinceaux (36) ou de brosses (37) ou tapis fibreux à points de compression localisés, fixes ou mobiles (38). Des structures de ce type sont particulièrement préconisées en zones à vocation de traitement de l'azote.
- La facilité de distribution des substrats étant essentielle en optimisation de l'épuration, par exemple de l'azote, la boucle noria d'alimentation, constituée d'un réservoir diffusant (39) par exemple géotextile et matière organique, circule dans un réservoir préférentiellement tubulaire et munis d'ouvertures d'échanges (40), plus ou moins immergée en nappe ou milieu saturé. Une autre disposition se limite à des canalisations d'injection, de vidange, distribuant des structures actives, par exemple de la matière organique à biodégradation progressive ou pilotée par un moyen approprié.

Le principe général de fonctionnement est illustré par la figure (3), ne faisant apparaître que les compartiments et habillages principaux avec les structures actives et pour deux modèles particuliers de réalisation:

Dans un premier modèle (41), à nombre de compartiments réduits, l'effluent est introduit dans un réservoir associé à une première membrane (42), les matières en suspension sont bloquées et extraites par vidange gravitaire et raclage manuel. Dans le compartiment suivant (43), regroupant une fraction significative des fonctions décrites précédemment, l'effluent est épuré progressivement par une matrice fibreuse, par exemple de la laine de roche, dans laquelle sont introduits les micro-structures (44) et structures spécifiques de régulation et réservoirs (45), dans le haut du réacteur l'épuration carbonée et la nitrification dominent (46), au milieu la dénitrification domine (47) et en bas, l'élimination des pathogènes domine (48) par la nature des matériaux suscepteurs, par exemple émetteurs d'un message électrique létal. Un simple drainage (49), élimine l'effluent traité.

Dans un second modèle, le schéma fait apparaître dans l'étage principal décrit ci-dessus une noria de distribution de carbone (50) et en sortie un réservoir actif contenant des textiles drainants cultures fixées (51), des cartouches d'extraction de phosphore (52), des électrodes géogrilles conductrices ou matériaux contacts de désinfection (53). Un second réacteur, alimenté par pompage solaire, filtre horizontal, est tout fibreux (54) et ménage des emplacements pour des cartouches actives facilement accessibles (55). Le réservoir à fonction relèvement liant les systèmes, filtres vertical et horizontal, peut être cloisonné pour servir de silo à boues (56).

Les structures actives et formes de réacteurs, ne sont pas limitées aux modes de réalisations choisies et représentées, de nombreuses autres variantes restent à la porté de l'homme de l'art, pour de nombreuses applications de traitement de fluides, principalement les eaux usées, mais également des effluents gazeux odorants ou plus ou moins toxiques, l'objet de la présente invention, étant défini dans les revendications 1-10.

## Revendications

1. Dispositif destiné à l'épuration de fluides par percolation au travers de compartiments successifs regroupés dans une enceinte, ladite enceinte comprenant ;
- un comportement supérieur (1) d'alimentation en fluide à traiter comprenant une membrane (2, 42) destinée à bloquer les matières en suspension;
- un compartiment intermédiaire dans le haut duquel (5, 46) est introduit l'effluent de l'étape précédente et où l'épuration carbonée et la nitrification dominent, ce compartiment comprenant une matrice fibreuse et des microstructures choisies parmi :
i) les boules creuses nids d'abeilles,
ii) les flocons fibreux,
iii) les chips formant cuvettes,
iv) les nappes de fibres de roche calandrées ou pressées
Ainsi qu'une connexion avec une ventilation primaire ;
l'effluent passant ensuite dans un niveau inférieur (11, 47) dans une zone membranaire de denitrification constituée de nappes;
- un compartiment bas membranaire (20, 22, 48) pour l'élimination de pathogènes par contact avec un matériau de désinfection ou par influx électrique ;
- une évacuation pour éliminer l'effluent traité, de préférence par simple drainage.

2. Dispositif d'épuration selon la revendication 1,
**caractérisé en ce que** la matrice fibreuse subit des traitements secondaires, d'induration et ou de mouillabilité et ou de compression et ou de cardage pour établir des gradients de porosités,

3. Dispositif d'épuration selon les revendication 1 et 2,
**caractérisé en ce que** la matrice fibreuse est sous forme de pinceaux (36), et ou de brosses (37) et ou tapis fibreux à points de compression fixes ou mobiles (38) formes créant des gradients d'humidité

4. Dispositif d'épuration selon la revendication 1,
**caractérisé en ce que** dans le compartiment supérieur, les matières en suspension bloquée par la membrane (42) régulateur de distribution, sont extraites par vidange.

5. Dispositif d'épuration selon la revendication 1,
**caractérisé en ce que** le compartiment intermédiaire, contient des nappes à rubans chauffants (14) .

6. Dispositif d'épuration selon la revendication 1,
**caractérisé en ce que** le compartiment intermédiaire, contient des volumes creux (16) pour l'injection de substrats en suspension (17) ou pour l'injection par noria entraînant un fourreau (18)

7. Dispositif d'épuration selon les revendications 1 et 5,
**caractérisé en ce que** le compartiment intermédiaire, contient des volumes creux pour l'injection de substrats, pour l'élimination du phosphore et ou des polluants non dégradé et ou la dénitrification.

8. Dispositif d'épuration selon les revendications 1 et 5,
**caractérisé en ce que** dans le compartiment intermédiaire, la boucle noria d'alimentation est constituée d'un réservoir diffusant (39) préférentiellement tubulaire et munis d'ouvertures d'échanges (40), ou de canalisations d'injection et de vidange.

9. Dispositif d'épuration selon la revendication 1,
**caractérisé en ce que** le compartiment bas contient des électrodes géogrilles conductrices, de désinfection (53).

10. Dispositif d'épuration selon la revendication 1,
**caractérisé en ce que** l'effluent sortant du compartiment intermédiaire, entre avant élimination, dans un filtre horizontal (25) mélangeant fibres et microstructures en noria ou cartouches (26).

## Claims

1. Fluids treatment device including :
- a biological filter reactor (1) comprising filters, said reactor being preferably weighted (3) or anchored on buoyancy;
- a composite reservoir (6) in which flows the effluent (with low concentration in B0D₅ and nitrified) derived from 1, and where this effluent is cleared from its suspended particles by a filter (22), preferably in a retention channel (23);
- a resorption system with hydraulic function fed by said fluid cleared of its particles and set between two layers of soil (8,9,27) more or less reworked or constructed, said system including a nappe or horizontal compartment (26,43) very porous in geocomposite, grains and fibers (24), with controlled ventilation (25), in which the effluent is treated in an aerobic manner, before being absorbed by the native soil.

2. Fluids treatment device as per claim 1,
**characterized by** a particle extraction and resorption system feeder reservoir (6)(10), equipped with a filter (22) that traps the effluent suspended matters, and also composed of means of extraction by washing off or pumping out of said matters in order to bring them, particularly, in a retention channel (23).

3. Fluids treatment device as per claim 1,
**characterized by** its composite reservoir (6) including a drainable lock chamber (36) with controlled ventilation (37) and of an advanced purification compartment (38) containing active material (39,40) for means of denitrification and/or dephosphatation and/or disinfection and/or chemical or biological correction.

4. Fluids treatment device as per claim 1,
- **characterized by** its constructed soil (9,27), support of the resorption system, (7,10) and composed, favourably, of an anisotropic mix of stabilized mineral or natural fibers and of mineral grains, preferably expanded, equipped with lateral active baffles (51) formed, for example, by geosynthetic, each active baffle having an air/water semi-permeability adjusted according to the type of soil and degree of saturation.

5. Fluids treatment device as per claim 1,
**characterized by** the fact that its constructed soil, support of the resorption system, is supplied with capillary wicks (55).

6. Fluids treatment device as per claim 5,
**characterized by** its constructed soil (9,27) that is ventilated by discontinuous hollow parts and protected against water infiltration by lateral drains (56,57).

7. Fluids treatment device as per claim 1,
**characterized by** the fact that its resorption system is also composed, in combination, constrained or undulated arch plates shaped like tiles.

8. Fluids treatment device as per claim 1,
**characterized by** the fact that its constructed soil (8), laid on top of the resorption system (7,10), is itself covered by natural soil.

9. Fluids treatment device as per claim 1,
**characterized by** the fact that it includes many composite reservoirs (6) and resorption systems (7,10) that are installed in line or in clusters.

10. Fluids treatment device as per claim 1,
**characterized by** the fact that its biological reactor (1) is composed of baffled, flat or elongated tanks.

## Patentansprüche

1. Vorrichtung zur Reinigung von Fluiden mit:
- einem Biofilterreaktor (1) mit Filtern, wobei der genannte Reaktor gegen den hydrostatischen Auftrieb vorzugsweise beschwert (3) oder verankert ist;
- einem Verbundbehälter (6), in dem das BSB5-arme und nitrifizierte Abwasser aus (1) fließt und in dem das Abwasser von seinen Schwebepartikeln mit einem Filter (22) befreit wird, wobei die Partikel vorzugsweise in einem Rückhaltekanal (23) abgeschieden werden;
- einem Resorptionssystem (10) mit hydraulischer Punktion, welches von dem genannten, von seinen Partikeln befreiten Fluid beaufschlagt wird und zwischen zwei Schichten von mehr oder weniger umgestaltetem oder künstlich angelegtem Boden (8, 9, 27) angeordnet ist, wobei das genannte System eine waagerechte, sehr poröse, aus einem Geoverbundstoff, Körnern und Fasern (24) bestehende und eine kontrollierte Belüftung (25) aufweisende Lage oder Abteilung (26, 43) aufweist, in der das Abwasser aerob behandelt wird, bevor es in den Boden vor Ort resorbiert wird.

2. Reinigungsvorrichtung nach Anspruch 1,
**dadurch gekennzeichnet, dass** der Behälter (6) zum Abscheiden von Partikeln und zur Versorgung des Resorptionssystems (10), welcher mit einem die in dem Abwasser schwebenden Stoffe fangenden Filter (22) ausgestattet ist, ferner Mittel zum Abscheiden durch Waschen oder Pumpen der genannten Stoffe aufweist, um sie insbesondere einem Rückhaltekanal (23) zuzuführen.

3. Reinigungsvorrichtung nach Anspruch 1,
**dadurch gekennzeichnet, dass** der Verbundbehälter (6) durch eine entleerbare Schleuse (36) mit kontrollierter Belüftung (37) und eine zusätzliche Reinigungsabteilung (38) mit aktiven Materialien (39, 40) zur Denitrifizierung und/oder zur Dephosphatierung und/oder zur Desinfektion und/oder zur chemischen oder biologischen Korrektur gebildet ist.

4. Reinigungsvorrichtung nach Anspruch 1,
**dadurch gekennzeichnet, dass** der künstlich angelegte Boden (9, 27), welcher als Träger des Resorptionssystems (7, 10) dient und vorzugsweise aus einem anisotropen Gemisch aus mineralischen oder natürlichen stabilisierten Fasern und aus mineralischen Körnern besteht, welche vorzugsweise aufgebläht sind, seitlich mit aktiven Trennwänden (51) ausgestattet ist, welche beispielsweise durch einen geosynthetischen Stoff gebildet werden, wobei jede aktive Trennwand (51) eine in Abhängigkeit von dem Bodentyp und dem Sättigungsgrad kontrollierte Luft/Wasser-Semipermeabilität besitzt.

5. Reinigungsvorrichtung nach Anspruch 1,
**dadurch gekennzeichnet, dass** der als Träger des Resorptionssystems (7, 10) dienende künstlich angelegte Boden (9, 27) mit Dochten (55) mit kapillarem Fluss versehen ist.

6. Reinigungsvorrichtung nach Anspruch 5,
**dadurch gekennzeichnet, dass** der künstlich angelegte Boden (9, 27) durch diskontinuierliche Hohlkörper belüftet und gegen die Wassereinbrüche durch seitliche Drainagen (56, 57) geschützt ist.

7. Reinigungsvorrichtung nach Anspruch 1,
**dadurch gekennzeichnet, dass** das Resorptionssystem (7, 10) ferner ziegelförmig gespannte oder gewellte Plattengewölbe in einer Kombination aufweist.

8. Reinigungsvorrichtung nach Anspruch 1,
**dadurch gekennzeichnet, dass** der künstlich angelegte, über dem Resorptionssystem (7, 10) angeordnete Boden (8) selbst von einem natürlichen Boden überlagert ist.

9. Reinigungsvorrichtung nach Anspruch 1,
**dadurch gekennzeichnet, dass** sie eine Mehrzahl von Verbundbehältern (6) und von Resorptionssystemen (7, 10) aufweist, welche in Form von Linien oder von kleinen Inseln ausgeführt sind.

10. Reinigungsvorrichtung nach Anspruch 1,
**dadurch gekennzeichnet, dass** der Bioreaktor (1) ein Reaktor mit abgegrenzten, flachen oder länglichen Schächten ist.
